# EUROPEAN PATENT SPECIFICATION

(11) **EP 3 294 030 B1**
(45) Date of publication and mention of the grant of the patent: **31.10.2018**
(21) Application number: 17186734.4
(22) Date of filing: 09.04.2014
(51) Int. Cl.: H04W 72/08, H04W 48/16, H04W 52/02, H04W 36/00, H04W 48/20, H04W 74/00

(54) **SYSTEM INFORMATION TRANSMISSION METHODS, BASE STATION, AND USER EQUIPMENT**
SYSTEMINFORMATIONSÜBERTRAGUNGSVERFAHREN, BASISSTATION UND BENUTZERGERÄT
PROCÉDÉS DE TRANSMISSION D'INFORMATIONS SYSTÈME, STATION DE BASE ET ÉQUIPEMENT UTILISATEUR

(43) Date of publication of application: 14.03.2018
(62) Divisional of application: 14888587.4
(73) Proprietor: HUAWEI TECHNOLOGIES CO., LTD., Guangdong 518129 (CN)
(72) Inventor: LI, Sainan, Shenzhen, Guangdong 518129 (CN); HUANG, Huang, Shenzhen, Guangdong 518129 (CN); HUANG, Lei, Shenzhen, Guangdong 518129 (CN)
(74) Representative: Pfenning, Meinig & Partner mbB

(56) References cited:
- EP-A2- 1 213 941
- WO-A1-00/60895
- US-A1- 2004 152 480
- US-A1- 2009 203 381
- US-A1- 2013 217 392

## Description

### TECHNICAL FIELD

The present invention relates to the field of communications technologies, and specifically, to a system information transmission method, a base station, and user equipment.

### BACKGROUND

With rapid development of mobile communications technologies, user equipment imposes increasingly high requirements on a capacity, a data throughput rate, transmission delay, and transmission reliability of a communications system. A bandwidth of a conventional microwave frequency band is between 300 MHZ and 6 GHZ (including 300 MHZ and 6 GHZ). The provided bandwidth is very limited, which cannot meet the requirements of the user equipment on the communications system. Further, because microwave communication (also referred to as "low-frequency communication") is characterized by a small transmission loss and a wide coverage range, low-frequency base stations are distributed sparsely, and construction costs of a low-frequency base station are relatively high. A bandwidth of a millimetric wave frequency band is between 30 GHZ and 300 GHZ (including 30 GHZ and 300 GHZ), and millimetric wave communication (also referred to as "high-frequency communication") is characterized by a large capacity and a high data throughput rate. However, obstacles cause relatively large losses in millimetric wave communication, which results in a small coverage range of a high-frequency base station. To meet the requirements of the user equipment on the communications system, low/high-frequency collaborative networking has emerged. However, in a system architecture with low/high-frequency collaborative networking, to enable the user equipment to access a high-frequency network and a low-frequency network, both the high-frequency network and the low-frequency network need to send respective system information (such as a timer, common channel information, cell selection and reselection information, and neighboring cell information required by the user equipment), which occupies a relatively large quantity of channel resources. Further, the user equipment needs to search for both the high-frequency network and the low-frequency network, which causes relatively high power consumption.

US 2009/203381 A1 provides a mobile communication system, a radio network controller (RNC), and a neighbor cell list filtering method which can control the selection of a frequency to be used at the hard handover performed in a network environment using a plurality of frequency bands and frequencies to reduce the number of activation of the compressed mode operation as much as possible. The RNC produces a filtered neighbor cell list by using information contained in the UE capability indication reported by the user equipment and the use priority data on frequencies designated by the network operator, and neighbor cell information only suitable for the handover is left in the neighbor cell list and notified to the user equipment.

US2004/152480 A1 relates to the creation of an individual NCL for a user under consideration of the velocity of speed in order to exclude those cells which are not suitable for said UE.

WO 00/60895 A1 discloses a data mechanism for assisting third generational mobile radio systems to handoff mobile radio connection to neighboring cells when the neighboring cells are of a foreign generational type. The data mechanism includes a container in the data map which is a generic structure, not particular to any generation system. The generic structure can be content-specific to any of many different generational communications protocol.

### SUMMARY

Embodiments of the present invention disclose a system information transmission method, a base station, and user equipment, to resolve existing problems in low/high-frequency collaborative networking that many channel resources are occupied and power consumption of user equipment is high.

A first aspect of the embodiments of the present invention discloses a base station, including:
a sending module, configured to send system information of the base station to user equipment at a first frequency of the base station;
a receiving module, configured to receive identifiers of coverage base stations that cover the user equipment and access capability information of the user equipment that are sent by the user equipment, where the access capability information is used to indicate a second frequency band that the user equipment is allowed to access; and
a determining module, configured to determine, from the coverage base stations and according to the second frequency band, one or more target base stations whose frequencies are located in the second frequency band, where
the sending module is further configured to send system information of the one or more target base stations to the user equipment.

In a first possible implementation manner of the first aspect of the embodiments of the present invention, the sending module is further configured to send, to the one or more target base stations, a request message for requesting the one or more target base stations to send system information, to trigger the one or more target base stations to respond to the request message; and
the receiving module is further configured to receive the system information sent by the one or more target base stations.

With reference to the first aspect of the embodiments of the present invention, in a second possible implementation manner of the first aspect of the embodiments of the present invention, the base station stores the system information of the one or more target base stations; and
the receiving module is further configured to receive updated system information sent by the one or more target base stations; and
the sending module is further configured to send, to the one or more target base stations, a feedback message for feeding back whether the base station has finished receiving the updated system information.

With reference to the first aspect of the embodiments of the present invention, the first possible implementation manner of the first aspect of the embodiments of the present invention, or the second possible implementation manner of the first aspect of the embodiments of the present invention, in a third possible implementation manner of the first aspect of the embodiments of the present invention, when the base station is a high-frequency base station, the target access base station is a low-frequency base station or a hybrid low/high-frequency base station; or
when the base station is a low-frequency base station, the target access base station is a high-frequency base station or a hybrid low/high-frequency base station; or
when the base station is a hybrid low/high-frequency base station, the target access base station is any one base station of a high-frequency base station, a low-frequency base station, or a hybrid low/high-frequency base station.

With reference to the first aspect of the embodiments of the present invention, the first possible implementation manner of the first aspect of the embodiments of the present invention, the second possible implementation manner of the first aspect of the embodiments of the present invention, or the third possible implementation manner of the first aspect of the embodiments of the present invention, in a fourth possible implementation manner of the first aspect of the embodiments of the present invention, a structure of the system information includes one master information block and multiple system information blocks, where the master information block is used to broadcast state information of the base station that sends the system information, and the system information blocks are used to broadcast access information required by the user equipment for accessing the base station that sends the system information.

A third aspect of the embodiments of the present invention discloses user equipment, including:
a receiving module, configured to receive system information of a first base station that is sent by the first base station at a first frequency of the first base station;
an access module, configured to access the first base station according to the system information of the first base station;
a sending module, configured to send identifiers of coverage base stations that cover the user equipment and access capability information of the user equipment to the first base station, where the access capability information is used to indicate a second frequency band that the user equipment is allowed to access
the receiving module is further configured to receive the system information of the one or more target base stations sent by the first base station; and
a selecting module, configured to select system information of one target base station from the system information of the one or more target base stations as system information of a second base station, where
the access module is further configured to access the second base station according to the system information of the second base station.

In a first possible implementation manner of the third aspect of the embodiments of the present invention, when the first base station is a high-frequency base station, the second base station is a low-frequency base station or a hybrid low/high-frequency base station; or
when the first base station is a low-frequency base station, the second base station is a high-frequency base station or a hybrid low/high-frequency base station; or
when the first base station is a hybrid low/high-frequency base station, the second base station is any one base station of a high-frequency base station, a low-frequency base station, or a hybrid low/high-frequency base station.

With reference to the third aspect of the embodiments of the present invention or the first possible implementation manner of the third aspect of the embodiments of the present invention, in a second possible implementation manner of the third aspect of the embodiments of the present invention, a structure of the system information includes one master information block and multiple system information blocks, where the master information block is used to broadcast state information of the base station that sends the system information, and the system information blocks are used to broadcast access information required by the user equipment for accessing the base station that sends the system information.

A fifth aspect of the embodiments of the present invention discloses a system information transmission method, including:
sending, by a first base station, system information of the first base station to user equipment at a first frequency of the first base station
receiving, by the first base station, identifiers of coverage base stations that cover the user equipment and access capability information of the user equipment that are sent by the user equipment, where the access capability information is used to indicate a second frequency band that the user equipment is allowed to access;
determining, by the first base station, from the coverage base stations and according to the second frequency band, one or more target base stations whose frequencies are located in the second frequency band; and
sending, by the first base station, system information of the one or more target base stations to the user equipment.

In a first possible implementation manner of the fifth aspect of the embodiments of the present invention, before the sending, by the first base station, system information of the one or more target base stations to the user equipment, the method further includes:
sending, by the first base station to the one or more target base stations, a request message for requesting the one or more target base stations to send system information, to trigger the one or more target base stations to respond to the request message; and
receiving, by the first base station, the system information sent by the one or more target base stations.

With reference to the fifth aspect of the embodiments of the present invention, in a second possible implementation manner of the fifth aspect of the embodiments of the present invention, the first base station stores the system information of the one or more target base stations; and
the method further includes:
receiving, by the first base station, updated system information sent by the one or more target base stations; and
sending, by the first base station to the one or more target base stations, a feedback message for feeding back whether the first base station has finished receiving the updated system information.

With reference to the fifth aspect of the embodiments of the present invention, the first possible implementation manner of the fifth aspect of the embodiments of the present invention, or the second possible implementation manner of the fifth aspect of the embodiments of the present invention, in a third possible implementation manner of the fifth aspect of the embodiments of the present invention, when the first base station is a high-frequency base station, the second base station is a low-frequency base station or a hybrid low/high-frequency base station; or
when the first base station is a low-frequency base station, the second base station is a high-frequency base station or a hybrid low/high-frequency base station; or
when the first base station is a hybrid low/high-frequency base station, the second base station is any one base station of a high-frequency base station, a low-frequency base station, or a hybrid low/high-frequency base station.

With reference to the fifth aspect of the embodiments of the present invention, the first possible implementation manner of the fifth aspect of the embodiments of the present invention, the second possible implementation manner of the fifth aspect of the embodiments of the present invention, or the third possible implementation manner of the fifth aspect of the embodiments of the present invention, in a fourth possible implementation manner of the fifth aspect of the embodiments of the present invention, a structure of the system information includes one master information block and multiple system information blocks, where the master information block is used to broadcast state information of the base station that sends the system information, and the system information blocks are used to broadcast access information required by the user equipment for accessing the base station that sends the system information.

A sixth aspect of the embodiments of the present invention discloses a system information transmission method, including:
receiving, by user equipment, system information of a first base station that is sent by the first base station at a first frequency of the first base station;
accessing, by user equipment, the first base station according to the system information of the first base station;
sending, by the user equipment, identifiers of coverage base stations that cover the user equipment and access capability information of the user equipment to the first base station, where the access capability information is used to indicate a second frequency band that the user equipment is allowed to access;
receiving, by the user equipment, the system information of the one or more target base stations sent by the first base station; and
selecting, by the user equipment, system information of one target base station from the system information of the one or more target base stations as system information of a second base station, and accessing the second base station according to the system information of the second base station.

In a first possible implementation manner of the sixth aspect of the embodiments of the present invention, when the first base station is a high-frequency base station, the second base station is a low-frequency base station or a hybrid low/high-frequency base station; or
when the first base station is a low-frequency base station, the second base station is a high-frequency base station or a hybrid low/high-frequency base station; or
when the first base station is a hybrid low/high-frequency base station, the second base station is any one base station of a high-frequency base station, a low-frequency base station, or a hybrid low/high-frequency base station.

With reference to the sixth aspect of the embodiments of the present invention or the first possible implementation manner of the sixth aspect of the embodiments of the present invention, in a second possible implementation manner of the sixth aspect of the embodiments of the present invention, a structure of the system information includes one master information block and multiple system information blocks, where the master information block is used to broadcast state information of the base station that sends the system information, and the system information blocks are used to broadcast access information required by the user equipment for accessing the base station that sends the system information.

In the embodiments of the present invention, a first base station sends system information of the first base station to user equipment at a frequency of the first base station, to trigger the user equipment to access the first base station according to the system information of the first base station; then, receives identifiers of coverage base stations that cover the user equipment and access capability information of the user equipment that are sent by the user equipment, where the access capability information is used to indicate a target frequency band that the user equipment is allowed to access, and the target frequency band is different from a frequency band in which the frequency of the first base station is located; and the first base station determines, from the coverage base stations and according to the target frequency band, one or more target base stations whose frequencies are located in the target frequency band, and sends system information of the one or more target base stations to the user equipment, to trigger the user equipment to select system information of one target base station from the system information of the one or more target base stations as system information of a second base station, and access the second base station according to the system information of the second base station. According to the embodiments of the present invention, system information of a first base station is sent cyclically, and system information of a second base station is sent on demand, which decreases load of a broadcast channel. Moreover, user equipment does not need to search for two types of base stations, which reduces power consumption of the user equipment.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of a base station according to an embodiment of the present invention;
FIG. 2 is a schematic structural diagram of another base station according to an embodiment of the present invention;
FIG. 3 is a schematic structural diagram of user equipment according to an embodiment of the present invention;
FIG. 4 is a schematic structural diagram of another user equipment according to an embodiment of the present invention;
FIG. 5 is a schematic flowchart of a system information transmission method according to an embodiment of the present invention;
FIG. 6 is a schematic flowchart of another system information transmission method according to an embodiment of the present invention;
FIG. 7 is a schematic flowchart of still another system information transmission method according to an embodiment of the present invention;
FIG. 8 is a schematic flowchart of still another system information transmission method according to an embodiment of the present invention;
FIG. 9A and FIG. 9B are a schematic flowchart of still another system information transmission method according to an embodiment of the present invention;
FIG. 10A and FIG. 10B are a schematic flowchart of still another system information transmission method according to an embodiment of the present invention; and
FIG. 11 is a schematic structural diagram of system information according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The embodiments of the present invention disclose a system information transmission method, a base station, and user equipment. According to the embodiments of the present invention, system information of a first base station is sent cyclically, and system information of a second base station is sent on demand, which decreases load of a broadcast channel. Moreover, user equipment does not need to search for two types of base stations, which reduces power consumption of the user equipment. Respective detailed descriptions are provided below.

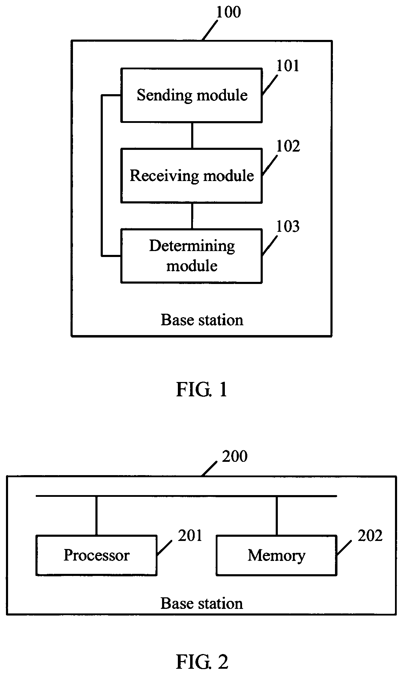

Referring to FIG. 1, FIG. 1 is a schematic structural diagram of a base station according to an embodiment of the present invention. As shown in FIG. 1, the base station 100 may include a sending module 101, a receiving module 102, and a determining module 103.

The sending module 101 is configured to send system information of the base station 100 to user equipment at a frequency of the base station 100.

In this embodiment of the present invention, the sending module 101 sends the system information of the base station 100 to the user equipment, to trigger the user equipment to access the base station 100 according to the system information of the base station 100, that is, to access a network (a high-frequency network or a low-frequency network) provided by the base station 100.

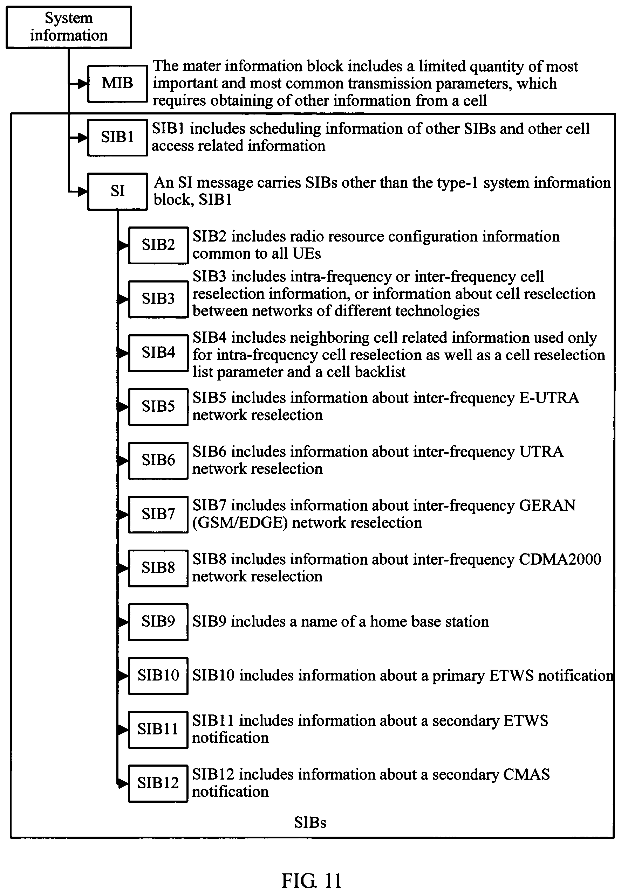

In this embodiment of the present invention, a structure of the system information includes one master information block and multiple system information blocks, where the master information block is used to broadcast state information of the base station 100, and the system information blocks are used to broadcast access information required by the user equipment for accessing the base station 100. The structure of the system information in this embodiment of the present invention may be shown in FIG. 11.

The receiving module 102 is configured to receive identifiers of coverage base stations that cover the user equipment and access capability information of the user equipment that are sent by the user equipment.

In this embodiment of the present invention, after accessing the base station 100, the user equipment sends the identifiers of the coverage base stations that cover the user equipment and the access capability information of the user equipment to the base station 100. Optionally, the coverage base stations that cover the user equipment may include a high-frequency base station, a low-frequency base station, and a hybrid low/high-frequency base station. Optionally, the access capability information may be used to indicate a target frequency band (such as a high-frequency frequency band or a low-frequency frequency band) that the user equipment is allowed to access. Optionally, the target frequency band may be different from a frequency band in which the frequency of the base station 100 is located. For example, if the frequency of the base station 100 is located in a low-frequency frequency band, the target frequency band may be a high-frequency frequency band that the user equipment is allowed to access; and if the frequency of the base station 100 is located in a high-frequency frequency band, the target frequency band may be a low-frequency frequency band that the user equipment is allowed to access.

The determining module 103 is configured to determine, from the coverage base stations and according to the target frequency band, one or more target base stations whose frequencies are located in the target frequency band.

The sending module 101 is further configured to send system information of the one or more target base stations to the user equipment.

In this embodiment of the present invention, the base station 100 may pre-store the system information of the one or more target base stations, and send the stored system information of the one or more target base stations to the user equipment; or the base station 100 may first obtain the system information of the one or more target base stations from the target base stations, and then, send the system information of the one or more target base stations to the user equipment. This embodiment of the present invention imposes no limitation.

In this embodiment of the present invention, the base station 100 sends the system information of the one or more target base stations to the user equipment, so that the user equipment selects system information of one target base station from the system information of the one or more target base stations as system information of a target access base station, and accesses the target access base station according to the system information of the target access base station.

In this embodiment of the present invention, if the base station 100 is a high-frequency base station, the target access base station is a low-frequency base station or a hybrid low/high-frequency base station, and if the target access base station is a hybrid low/high-frequency base station, that the user equipment accesses the target access base station is that the user equipment accesses a low-frequency network of the hybrid low/high-frequency base station. If the base station 100 is a low-frequency base station, the target access base station is a high-frequency base station or a hybrid low/high-frequency base station, and if the target access base station is a hybrid low/high-frequency base station, that the user equipment accesses the target access base station is that the user equipment accesses a high-frequency network of the hybrid low/high-frequency base station. If the base station 100 is a hybrid low/high-frequency base station, and the user equipment accesses a high-frequency network of the hybrid low/high-frequency base station, the target access base station may be a low-frequency base station or a hybrid low/high-frequency base station (the base station 100 or another hybrid low/high-frequency base station), and if the target access base station is a hybrid low/high-frequency base station, that the user equipment accesses the target access base station is that the user equipment accesses a low-frequency network of the hybrid low/high-frequency base station. If the base station 100 is a hybrid low/high-frequency base station, and the user equipment accesses a low-frequency network of the hybrid low/high-frequency base station, the target access base station may be a high-frequency base station or a hybrid low/high-frequency base station (the base station 100 or another hybrid low/high-frequency base station), and if the target access base station is a hybrid low/high-frequency base station, that the user equipment accesses the target access base station is that the user equipment accesses a high-frequency network of the hybrid low/high-frequency base station.

In an optional implementation manner, before the sending module 101 sends the system information of the one or more target base stations to the user equipment, the sending module 101 may be further configured to send, to the one or more target base stations, a request message for requesting the one or more target base stations to send system information.

The receiving module 102 may be further configured to receive the system information sent by the one or more target base stations.

In another optional implementation manner, the base station 100 stores the system information of the one or more target base stations, and the receiving module 102 may be further configured to receive updated system information sent by the one or more target base stations.

The sending module 101 may be further configured to send, to the one or more target base stations, a feedback message for feeding back whether the base station 100 has finished receiving the updated system information.

In this embodiment of the present invention, if the feedback message is used to feed back that the base station 100 has not finished receiving the updated system information, the one or more target base stations continue sending the updated system information to the base station 100.

In this embodiment of the present invention, system information of a base station is sent cyclically, and system information of a target access base station may be sent to user equipment by the base station on demand of the user equipment, which decreases load of a broadcast channel. Moreover, the user equipment does not need to search for the target access base station, which reduces power consumption of the user equipment.

Referring to FIG. 2, FIG. 2 is a schematic structural diagram of another base station according to an example of the present application. As shown in FIG. 2, the base station 200 may include a memory 201 and a processor 202, where the memory 201 stores a set of program code, and the processor 202 is configured to invoke the program code stored in the memory 201 to execute the following operations:
sending system information of the base station 200 to user equipment at a frequency of the base station 200, to trigger the user equipment to access the base station 200 according to the system information of the base station 200;
receiving identifiers of coverage base stations that cover the user equipment and access capability information of the user equipment that are sent by the user equipment, where the access capability information is used to indicate a target frequency band that the user equipment is allowed to access, and the target frequency band is different from a frequency band in which the frequency of the base station 200 is located;
determining, from the coverage base stations and according to the target frequency band, one or more target base stations whose frequencies are located in the target frequency band;and
sending system information of the one or more target base stations to the user equipment, to trigger the user equipment to select system information of one target base station from the system information of the one or more target base stations as system information of a target access base station, and access the target access base station according to the system information of the target access base station.

In an example, before the processor 202 sends the system information of the one or more target base stations to the user equipment, the processor 202 invokes the program code stored in the memory 201 to further execute the following operations:
sending, to the one or more target base stations, a request message for requesting the one or more target base stations to send system information, to trigger the one or more target base stations to respond to the request message; and
receiving the system information sent by the one or more target base stations.

In an example, the base station 200 stores the system information of the one or more target base stations, and the processor 202 invokes the program code stored in the memory 201 to further execute the following operations:
receiving updated system information sent by the one or more target base stations; and
sending, to the one or more target base stations, a feedback message for feeding back whether the base station 200 has finished receiving the updated system information.

In an example, when the base station 200 is a high-frequency base station, the target access base station is a low-frequency base station or a hybrid low/high-frequency base station; or when the base station 200 is a low-frequency base station, the target access base station is a high-frequency base station or a hybrid low/high-frequency base station; or when the base station 200 is a hybrid low/high-frequency base station, the target access base station is any one base station of a high-frequency base station, a low-frequency base station, or a hybrid low/high-frequency base station.

In an example, a structure of the system information includes one master information block and multiple system information blocks, where the master information block is used to broadcast state information of the base station that sends the system information, and the system information blocks are used to broadcast access information required by the user equipment for accessing the base station that sends the system information.

In this exampleof the present application, system information of a base station is sent cyclically, and system information of a target access base station may be sent to user equipment by the base station on demand of the user equipment, which decreases load of a broadcast channel. Moreover, the user equipment does not need to search for the target access base station, which reduces power consumption of the user equipment.

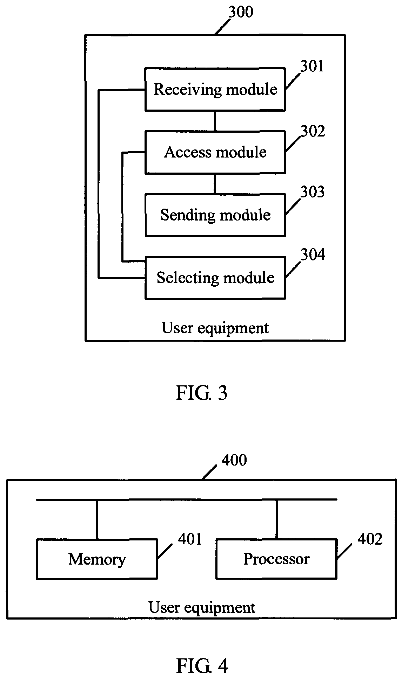

Referring to FIG. 3, FIG. 3 is a schematic structural diagram of user equipment according to an embodiment of the present invention. As shown in FIG. 3, the user equipment 300 may include a receiving module 301, an access module 302, a sending module 303, and a selecting module 304.

The receiving module 301 is configured to receive system information of a first base station that is sent by the first base station at a frequency of the first base station.

In this embodiment of the present invention, a structure of the system information includes one master information block and multiple system information blocks, where the master information block is used to broadcast state information of the base station, and the system information blocks are used to broadcast access information required by the user equipment 300 for accessing the base station. The structure of the system information in this embodiment of the present invention may be shown in FIG. 11.

The access module 302 is configured to access the first base station according to the system information of the first base station.

In this embodiment of the present invention, that the user equipment 300 accesses the first base station is that the user equipment 300 accesses a network (a high-frequency network or a low-frequency network) provided by the first base station.

The sending module 303 is configured to send identifiers of coverage base stations that cover the user equipment 300 and access capability information of the user equipment 300 to the first base station.

In this embodiment of the present invention, after accessing the first base station, the user equipment 300 sends the identifiers of the coverage base stations that cover the user equipment 300 and the access capability information of the user equipment 300 to the first base station. Optionally, the coverage base stations that cover the user equipment 300 may include a high-frequency base station, a low-frequency base station, and a hybrid low/high-frequency base station. Optionally, the access capability information may be used to indicate a target frequency band (such as a high-frequency frequency band or a low-frequency frequency band) that the user equipment 300 is allowed to access. Optionally, the target frequency band may be different from a frequency band in which the frequency of the first base station is located. For example, if the frequency of the first base station is located in a low-frequency frequency band, the target frequency band may be a high-frequency frequency band that the user equipment 300 is allowed to access; and if the frequency of the first base station is located in a high-frequency frequency band, the target frequency band may be a low-frequency frequency band that the user equipment 300 is allowed to access.

In this embodiment of the present invention, the user equipment 300 sends the identifiers of the coverage base stations that cover the user equipment 300 and the access capability information of the user equipment 300 to the first base station, so that the first base station determines, from the coverage base stations according to the target frequency band in the access capability information, one or more target base stations whose frequencies are located in the target frequency band, and sends system information of the one or more target base stations to the user equipment 300. Optionally, the first base station may pre-store the system information of the one or more target base stations, and send the stored system information of the one or more target base stations to the user equipment 300; or the first base station may first obtain the system information of the one or more target base stations from the target base stations, and then, send the system information of the one or more target base stations to the user equipment 300. This embodiment of the present invention imposes no limitation.

The receiving module 301 is further configured to receive the system information of the one or more target base stations sent by the first base station.

The selecting module 304 is configured to select system information of one target base station from the system information of the one or more target base stations as system information of a second base station.

The access module 302 is further configured to access the second base station according to the system information of the second base station.

In this embodiment of the present invention, if the first base station is a high-frequency base station, the second base station is a low-frequency base station or a hybrid low/high-frequency base station, and if the second base station is a hybrid low/high-frequency base station, that the user equipment 300 accesses the second base station is that the user equipment 300 accesses a low-frequency network of the hybrid low/high-frequency base station. If the first base station is a low-frequency base station, the second base station is a high-frequency base station or a hybrid low/high-frequency base station, and if the second base station is a hybrid low/high-frequency base station, that the user equipment 300 accesses the second base station is that the user equipment 300 accesses a high-frequency network of the hybrid low/high-frequency base station. If the first base station is a hybrid low/high-frequency base station, and the user equipment 300 accesses a high-frequency network of the hybrid low/high-frequency base station, the second base station may be a low-frequency base station or a hybrid low/high-frequency base station (the first base station or another hybrid low/high-frequency base station), and if the second base station is a hybrid low/high-frequency base station, that the user equipment 300 accesses the second base station is that the user equipment 300 accesses a low-frequency network of the hybrid low/high-frequency base station. If the first base station is a hybrid low/high-frequency base station, and the user equipment 300 accesses a low-frequency network of the hybrid low/high-frequency base station, the second base station may be a high-frequency base station or a hybrid low/high-frequency base station (the first base station or another hybrid low/high-frequency base station), and if the second base station is a hybrid low/high-frequency base station, that the user equipment 300 accesses the second base station is that the user equipment 300 accesses a high-frequency network of the hybrid low/high-frequency base station.

In this embodiment of the present invention, user equipment does not need to search for both a first base station and a second base station, which reduces power consumption of the user equipment. Moreover, system information of the first base station is sent cyclically, and system information of the second base station is sent by the first base station on demand of the user equipment, which decreases load of a broadcast channel.

Referring to FIG. 4, FIG. 4 is a schematic structural diagram of another user equipment according to an example of the present application. As shown in FIG. 4, the user equipment 400 may include a memory 401 and a processor 402, where the memory 401 stores a set of program code, and the processor 402 is configured to invoke the program code stored in the memory 401 to execute the following operations:
receiving system information of a first base station that is sent by the first base station at a frequency of the first base station;
accessing the first base station according to the system information of the first base station;
sending identifiers of coverage base stations that cover the user equipment 400 and access capability information of the user equipment 400 to the first base station, where the access capability information is used to indicate a target frequency band that the user equipment 400 is allowed to access, and the target frequency band is different from a frequency band in which the frequency of the first base station is located, so that the first base station determines, from the coverage base stations and according to the target frequency band, one or more target base stations whose frequencies are located in the target frequency band, and sends system information of the one or more target base stations to the user equipment 400;
receiving the system information of the one or more target base stations sent by the first base station; and
selecting system information of one target base station from the system information of the one or more target base stations as system information of a second base station, and accessing the second base station according to the system information of the second base station.

In an example, when the first base station is a high-frequency base station, the second base station is a low-frequency base station or a hybrid low/high-frequency base station; or when the first base station is a low-frequency base station, the second base station is a high-frequency base station or a hybrid low/high-frequency base station; or when the first base station is a hybrid low/high-frequency base station, the second base station is any one base station of a high-frequency base station, a low-frequency base station, or a hybrid low/high-frequency base station.

In an example, a structure of the system information includes one master information block and multiple system information blocks, where the master information block is used to broadcast state information of the base station that sends the system information, and the system information blocks are used to broadcast access information required by the user equipment 400 for accessing the base station that sends the system information.

In this exampleof the present application, user equipment does not need to search for both a first base station and a second base station, which reduces power consumption of the user equipment. Moreover, system information of the first base station is sent cyclically, and system information of the second base station is sent by the first base station on demand of the user equipment, which decreases load of a broadcast channel.

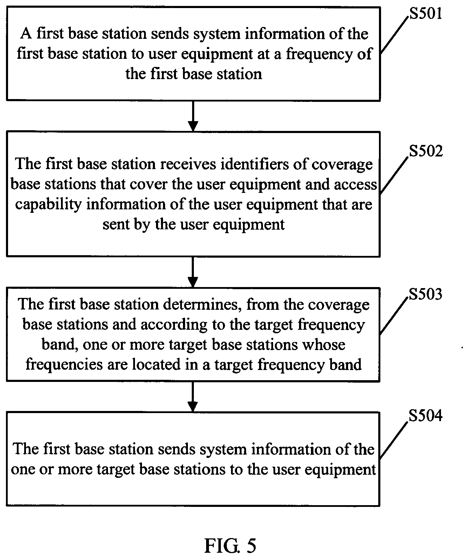

Referring to FIG. 5, FIG. 5 is a schematic flowchart of a system information transmission method according to an example of the present application. The method shown in FIG. 5 may be applied to a system architecture with low/high-frequency collaborative networking, which is not limited by this embodiment of the present invention. As shown in FIG. 5, the system information transmission method may include the following steps:

S501: A first base station sends system information of the first base station to user equipment at a frequency of the first base station.

In this embodiment of the present invention, the system information of the first base station is used to trigger the user equipment to access the first base station according to the system information of the first base station, that is, to access a network (a high-frequency network or a low-frequency network) provided by the first base station.

In this embodiment of the present invention, a structure of the system information includes one master information block and multiple system information blocks, where the master information block is used to broadcast state information of the base station, and the system information blocks are used to broadcast access information required by the user equipment for accessing the base station. The structure of the system information in this embodiment of the present invention may be shown in FIG. 11. FIG. 11 is a schematic structural diagram of system information according to an embodiment of the present invention. As shown in FIG. 11, the system information includes one MIB (master information block, Master Information Block) and 12 SIBs (system information block, System Information Block). The MIB is carried on a BCCH (broadcast control channel, Broadcast Control Channel) → a BCH (broadcast channel, Broadcast Channel) → a PBCH (physical broadcast channel, Physical Broadcast Channel), and the MIB includes a limited quantity of most important and most common transmission parameters (such as a system bandwidth, a system frame number, and configuration information of a physical hybrid automatic repeat indicator channel) for acquiring other cell information. All SIBs except SIB1, including SIB2 to SIB12, are carried in SI (system information, System Information). In the system information, SIB1 is the most important system information second to the MIB, and carries scheduling information of SIB2 to SIB12, other cell access related information, and the like.

S502: The first base station receives identifiers of coverage base stations that cover the user equipment and access capability information of the user equipment that are sent by the user equipment.

In this embodiment of the present invention, after accessing the first base station, the user equipment sends the identifiers of the coverage base stations that cover the user equipment and the access capability information of the user equipment to the first base station. Optionally, the coverage base stations that cover the user equipment may include a high-frequency base station, a low-frequency base station, and a hybrid low/high-frequency base station. Optionally, the access capability information may be used to indicate a target frequency band (such as a high-frequency frequency band or a low-frequency frequency band) that the user equipment is allowed to access. Optionally, the target frequency band may be different from a frequency band in which the frequency of the first base station is located. For example, if the frequency of the first base station is located in a low-frequency frequency band, the target frequency band may be a high-frequency frequency band that the user equipment is allowed to access; and if the frequency of the first base station is located in a high-frequency frequency band, the target frequency band may be a low-frequency frequency band that the user equipment is allowed to access.

S503: The first base station determines, from the coverage base stations according to the target frequency band, one or more target base stations whose frequencies are located in a target frequency band.

S504: The first base station sends system information of the one or more target base stations to the user equipment.

In this embodiment of the present invention, the first base station may pre-store the system information of the one or more target base stations, and send the stored system information of the one or more target base stations to the user equipment; or the first base station may first obtain the system information of the one or more target base stations from the target base stations, and then, send the system information of the one or more target base stations to the user equipment. This embodiment of the present invention imposes no limitation.

In this embodiment of the present invention, the first base station sends the system information of the one or more target base stations to the user equipment, so that the user equipment selects system information of one target base station from the system information of the one or more target base stations as system information of a second base station, and accesses the second base station according to the system information of the second base station.

In this embodiment of the present invention, if the first base station is a high-frequency base station, the second base station is a low-frequency base station or a hybrid low/high-frequency base station, and if the second base station is a hybrid low/high-frequency base station, that the user equipment accesses the second base station is that the user equipment accesses a low-frequency network of the hybrid low/high-frequency base station. If the first base station is a low-frequency base station, the second base station is a high-frequency base station or a hybrid low/high-frequency base station, and if the second base station is a hybrid low/high-frequency base station, that the user equipment accesses the second base station is that the user equipment accesses a high-frequency network of the hybrid low/high-frequency base station. If the first base station is a hybrid low/high-frequency base station, and the user equipment accesses a high-frequency network of the hybrid low/high-frequency base station, the second base station may be a low-frequency base station or a hybrid low/high-frequency base station (the first base station or another hybrid low/high-frequency base station), and if the second base station is a hybrid low/high-frequency base station, that the user equipment accesses the second base station is that the user equipment accesses a low-frequency network of the hybrid low/high-frequency base station. If the first base station is a hybrid low/high-frequency base station, and the user equipment accesses a low-frequency network of the hybrid low/high-frequency base station, the second base station may be a high-frequency base station or a hybrid low/high-frequency base station (the first base station or another hybrid low/high-frequency base station), and if the second base station is a hybrid low/high-frequency base station, that the user equipment accesses the second base station is that the user equipment accesses a high-frequency network of the hybrid low/high-frequency base station.

In this embodiment of the present invention, a first base station sends system information of the first base station to user equipment at a frequency of the first base station, to trigger the user equipment to access the first base station according to the system information of the first base station; then, receives identifiers of coverage base stations that cover the user equipment and access capability information of the user equipment that are sent by the user equipment, where the access capability information is used to indicate a target frequency band that the user equipment is allowed to access, and the target frequency band is different from a frequency band in which the frequency of the first base station is located; and the first base station determines, from the coverage base stations and according to the target frequency band, one or more target base stations whose frequencies are located in the target frequency band, and sends system information of the one or more target base stations to the user equipment, to trigger the user equipment to select system information of one target base station from the system information of the one or more target base stations as system information of a second base station, and access the second base station according to the system information of the second base station. According to this embodiment of the present invention, system information of a first base station is sent cyclically, and system information of a second base station is sent on demand, which decreases load of a broadcast channel. Moreover, user equipment does not need to search for two types of base stations, which reduces power consumption of the user equipment and ensures a requirement of the user equipment on a communications system.

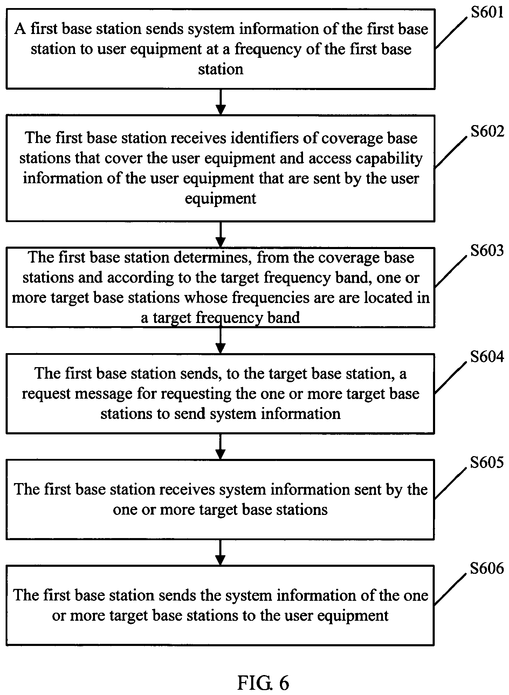

Referring to FIG. 6, FIG. 6 is a schematic flowchart of another system information transmission method according to an embodiment of the present invention. The method shown in FIG. 6 may be applied to a system architecture with low/high-frequency collaborative networking, which is not limited by this embodiment of the present invention. As shown in FIG. 6, the system information transmission method may include the following steps:

S601: A first base station sends system information of the first base station to user equipment at a frequency of the first base station.

In this embodiment of the present invention, the system information of the first base station is used to trigger the user equipment to access the first base station according to the system information of the first base station, that is, to access a network (a high-frequency network or a low-frequency network) provided by the first base station.

In this embodiment of the present invention, a structure of the system information includes one master information block and multiple system information blocks, where the master information block is used to broadcast state information of the base station, and the system information blocks are used to broadcast access information required by the user equipment for accessing the base station. The structure of the system information in this embodiment of the present invention may be shown in FIG. 11.

S602: The first base station receives identifiers of coverage base stations that cover the user equipment and access capability information of the user equipment that are sent by the user equipment.

In this embodiment of the present invention, after accessing the first base station, the user equipment sends the identifiers of the coverage base stations that cover the user equipment and the access capability information of the user equipment to the first base station. Optionally, the coverage base stations that cover the user equipment may include a high-frequency base station, a low-frequency base station, and a hybrid low/high-frequency base station. Optionally, the access capability information may be used to indicate a target frequency band (such as a high-frequency frequency band or a low-frequency frequency band) that the user equipment is allowed to access. Optionally, the target frequency band may be different from a frequency band in which the frequency of the first base station is located. For example, if the frequency of the first base station is located in a low-frequency frequency band, the target frequency band may be a high-frequency frequency band that the user equipment is allowed to access; and if the frequency of the first base station is located in a high-frequency frequency band, the target frequency band may be a low-frequency frequency band that the user equipment is allowed to access.

S603: The first base station determines, from the coverage base stations according to the target frequency band, one or more target base stations whose frequencies are located in a target frequency band.

S604: The first base station sends, to the one or more target base stations, a request message for requesting the one or more target base stations to send system information.

In this embodiment of the present invention, after receiving the request message, the one or more target base stations send the system information of the one or more target base stations to the first base station.

S605: The first base station receives system information sent by the one or more target base stations.

S606: The first base station sends the system information of the one or more target base stations to the user equipment.

In this embodiment of the present invention, the first base station sends the system information of the one or more target base stations to the user equipment, so that the user equipment selects system information of one target base station from the system information of the one or more target base stations as system information of a second base station, and accesses the second base station according to the system information of the second base station.

In this embodiment of the present invention, if the first base station is a high-frequency base station, the second base station is a low-frequency base station or a hybrid low/high-frequency base station, and if the second base station is a hybrid low/high-frequency base station, that the user equipment accesses the second base station is that the user equipment accesses a low-frequency network of the hybrid low/high-frequency base station. If the first base station is a low-frequency base station, the second base station is a high-frequency base station or a hybrid low/high-frequency base station, and if the second base station is a hybrid low/high-frequency base station, that the user equipment accesses the second base station is that the user equipment accesses a high-frequency network of the hybrid low/high-frequency base station. If the first base station is a hybrid low/high-frequency base station, and the user equipment accesses a high-frequency network of the hybrid low/high-frequency base station, the second base station may be a low-frequency base station or a hybrid low/high-frequency base station (the first base station or another hybrid low/high-frequency base station), and if the second base station is a hybrid low/high-frequency base station, that the user equipment accesses the second base station is that the user equipment accesses a low-frequency network of the hybrid low/high-frequency base station. If the first base station is a hybrid low/high-frequency base station, and the user equipment accesses a low-frequency network of the hybrid low/high-frequency base station, the second base station may be a high-frequency base station or a hybrid low/high-frequency base station (the first base station or another hybrid low/high-frequency base station), and if the second base station is a hybrid low/high-frequency base station, that the user equipment accesses the second base station is that the user equipment accesses a high-frequency network of the hybrid low/high-frequency base station.

In this embodiment of the present invention, system information of a first base station is sent cyclically, and system information of a second base station is sent on demand, which decreases load of a broadcast channel. Moreover, the system information of the second base station may be sent by the first base station to user equipment by means of real-time communication between the base stations, and the user equipment does not need to search for the second base station, which reduces power consumption of the user equipment and ensures a requirement of the user equipment on a communications system.

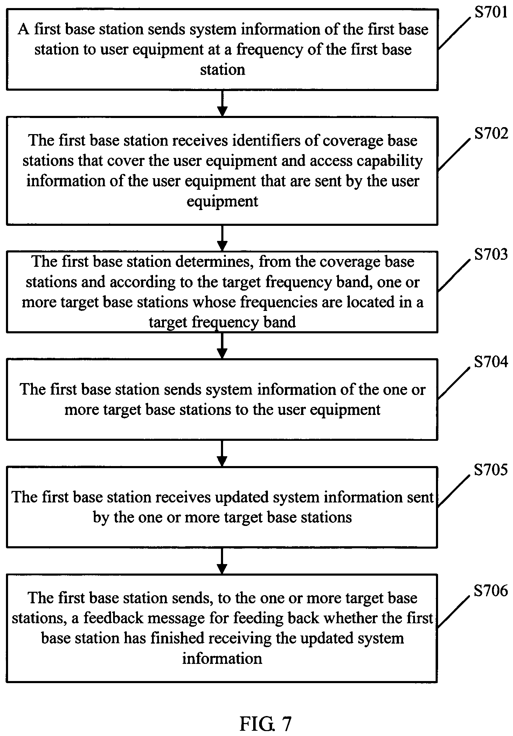

Referring to FIG. 7, FIG. 7 is a schematic flowchart of still another system information transmission method according to an embodiment of the present invention. The method shown in FIG. 7 may be applied to a system architecture with low/high-frequency collaborative networking, which is not limited by this embodiment of the present invention. As shown in FIG. 7, the system information transmission method may include the following steps:

S701: A first base station sends system information of the first base station to user equipment at a frequency of the first base station.

In this embodiment of the present invention, the system information of the first base station is used to trigger the user equipment to access the first base station according to the system information of the first base station, that is, to access a network (a high-frequency network or a low-frequency network) provided by the first base station.

In this embodiment of the present invention, a structure of the system information includes one master information block and multiple system information blocks, where the master information block is used to broadcast state information of the base station, and the system information blocks are used to broadcast access information required by the user equipment for accessing the base station. The structure of the system information in this embodiment of the present invention may be shown in FIG. 11.

S702: The first base station receives identifiers of coverage base stations that cover the user equipment and access capability information of the user equipment that are sent by the user equipment.

In this embodiment of the present invention, after accessing the first base station, the user equipment sends the identifiers of the coverage base stations that cover the user equipment and the access capability information of the user equipment to the first base station. Optionally, the coverage base stations that cover the user equipment may include a high-frequency base station, a low-frequency base station, and a hybrid low/high-frequency base station. Optionally, the access capability information may be used to indicate a target frequency band (such as a high-frequency frequency band or a low-frequency frequency band) that the user equipment is allowed to access. Optionally, the target frequency band may be different from a frequency band in which the frequency of the first base station is located. For example, if the frequency of the first base station is located in a low-frequency frequency band, the target frequency band may be a high-frequency frequency band that the user equipment is allowed to access; and if the frequency of the first base station is located in a high-frequency frequency band, the target frequency band may be a low-frequency frequency band that the user equipment is allowed to access.

S703: The first base station determines, from the coverage base stations according to the target frequency band, one or more target base stations whose frequencies are located in a target frequency band.

S704: The first base station sends system information of the one or more target base stations to the user equipment.

In this embodiment of the present invention, the first base station may store the system information of the one or more target base stations.

In this embodiment of the present invention, the first base station sends the system information of the one or more target base stations to the user equipment, so that the user equipment selects system information of one target base station from the system information of the one or more target base stations as system information of a second base station, and accesses the second base station according to the system information of the second base station.

S705: The first base station receives updated system information sent by the one or more target base stations.

S706: The first base station sends, to the one or more target base stations, a feedback message for feeding back whether the first base station has finished receiving the updated system information.

In this embodiment of the present invention, if the feedback message is used to feed back that the first base station has not finished receiving the updated system information, the one or more target base stations continue sending the updated system information to the first base station.

In this embodiment of the present invention, system information of a first base station is sent cyclically, the first base station stores system information of a second base station, and the system information of the second base station may be sent by the first base station to user equipment on demand of the user equipment, which decreases load of a broadcast channel. When the system information of the second base station is updated, the system information of the second base station stored by the first base station can also be updated in a timely manner, which ensures reliability of a communications system. Moreover, the user equipment does not need to search for the second base station, which reduces power consumption of the user equipment.

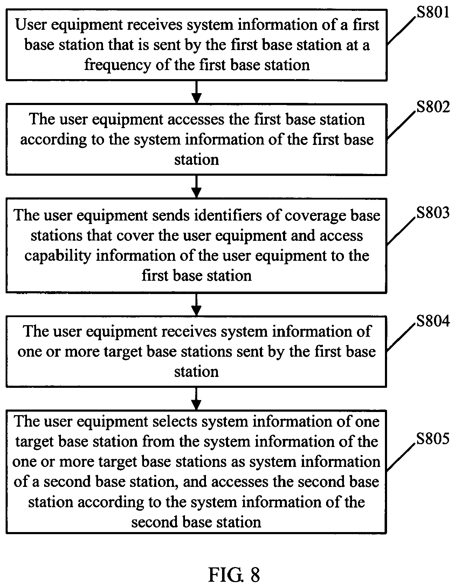

Referring to FIG. 8, FIG. 8 is a schematic flowchart of still another system information transmission method according to an embodiment of the present invention. The method shown in FIG. 8 may be applied to a system architecture with low/high-frequency collaborative networking, which is not limited by this embodiment of the present invention. As shown in FIG. 8, the system information transmission method may include the following steps:

S801: User equipment receives system information of a first base station that is sent by the first base station at a frequency of the first base station.

In this embodiment of the present invention, a structure of the system information includes one master information block and multiple system information blocks, where the master information block is used to broadcast state information of the base station, and the system information blocks are used to broadcast access information required by the user equipment for accessing the base station. The structure of the system information in this embodiment of the present invention may be shown in FIG. 11.

S802: The user equipment accesses the first base station according to the system information of the first base station.

In this embodiment of the present invention, that the user equipment accesses the first base station is that the user equipment accesses a network (a high-frequency network or a low-frequency network) provided by the first base station.

S803: The user equipment sends identifiers of coverage base stations that cover the user equipment and access capability information of the user equipment to the first base station.

In this embodiment of the present invention, after accessing the first base station, the user equipment sends the identifiers of the coverage base stations that cover the user equipment and the access capability information of the user equipment to the first base station. Optionally, the coverage base stations that cover the user equipment may include a high-frequency base station, a low-frequency base station, and a hybrid low/high-frequency base station. Optionally, the access capability information may be used to indicate a target frequency band (such as a high-frequency frequency band or a low-frequency frequency band) that the user equipment is allowed to access. Optionally, the target frequency band may be different from a frequency band in which the frequency of the first base station is located. For example, if the frequency of the first base station is located in a low-frequency frequency band, the target frequency band may be a high-frequency frequency band that the user equipment is allowed to access; and if the frequency of the first base station is located in a high-frequency frequency band, the target frequency band may be a low-frequency frequency band that the user equipment is allowed to access.

In this embodiment of the present invention, the user equipment sends the identifiers of the coverage base stations that cover the user equipment and the access capability information of the user equipment to the first base station, so that the first base station determines, from the coverage base stations according to the target frequency band in the access capability information, one or more target base stations whose frequencies are located in the target frequency band, and sends system information of the one or more target base stations to the user equipment. Optionally, the first base station may pre-store the system information of the one or more target base stations, and send the stored system information of the one or more target base stations to the user equipment; or the first base station may first obtain the system information of the one or more target base stations from the target base stations, and then, send the system information of the one or more target base stations to the user equipment. This embodiment of the present invention imposes no limitation.

S804: The user equipment receives system information of one or more target base stations sent by the first base station.

S805: The user equipment selects system information of one target base station from the system information of the one or more target base stations as system information of a second base station, and accesses the second base station according to the system information of the second base station.

In this embodiment of the present invention, if the first base station is a high-frequency base station, the second base station is a low-frequency base station or a hybrid low/high-frequency base station, and if the second base station is a hybrid low/high-frequency base station, that the user equipment accesses the second base station is that the user equipment accesses a low-frequency network of the hybrid low/high-frequency base station. If the first base station is a low-frequency base station, the second base station is a high-frequency base station or a hybrid low/high-frequency base station, and if the second base station is a hybrid low/high-frequency base station, that the user equipment accesses the second base station is that the user equipment accesses a high-frequency network of the hybrid low/high-frequency base station. If the first base station is a hybrid low/high-frequency base station, and the user equipment accesses a high-frequency network of the hybrid low/high-frequency base station, the second base station may be a low-frequency base station or a hybrid low/high-frequency base station (the first base station or another hybrid low/high-frequency base station), and if the second base station is a hybrid low/high-frequency base station, that the user equipment accesses the second base station is that the user equipment accesses a low-frequency network of the hybrid low/high-frequency base station. If the first base station is a hybrid low/high-frequency base station, and the user equipment accesses a low-frequency network of the hybrid low/high-frequency base station, the second base station may be a high-frequency base station or a hybrid low/high-frequency base station (the first base station or another hybrid low/high-frequency base station), and if the second base station is a hybrid low/high-frequency base station, that the user equipment accesses the second base station is that the user equipment accesses a high-frequency network of the hybrid low/high-frequency base station.

In this embodiment of the present invention, user equipment does not need to search for both a first base station and a second base station, which reduces power consumption of the user equipment. Moreover, system information of the first base station is sent cyclically, and system information of the second base station is sent by the first base station on demand of the user equipment, which decreases load of a broadcast channel.

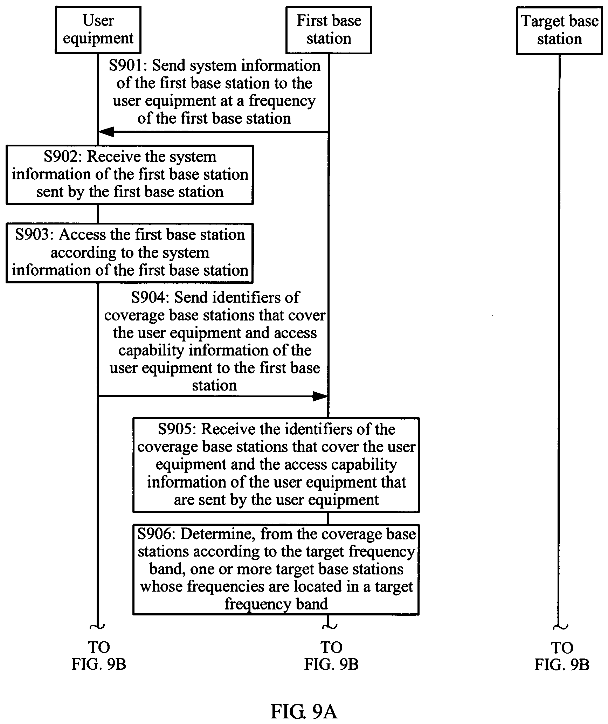

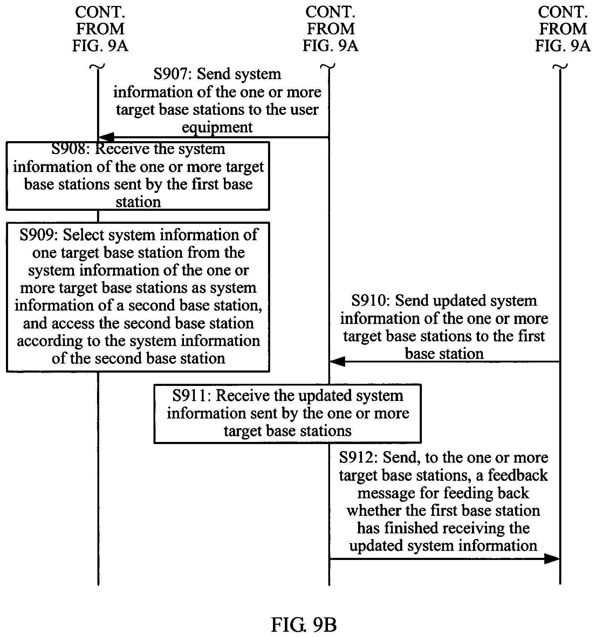

Referring to FIG. 9A and FIG. 9B, FIG. 9A and FIG. 9B are a schematic flowchart of still another system information transmission method according to an embodiment of the present invention. The method shown in FIG. 9A and FIG. 9B may be applied to a system architecture with low/high-frequency collaborative networking, which is not limited by this embodiment of the present invention. As shown in FIG. 9A and FIG. 9B, the system information transmission method may include the following steps:

S901: A first base station sends system information of the first base station to user equipment at a frequency of the first base station.

In this embodiment of the present invention, the system information of the first base station is used to trigger the user equipment to access the first base station according to the system information of the first base station, that is, to access a network (a high-frequency network or a low-frequency network) provided by the first base station.

In this embodiment of the present invention, a structure of the system information includes one master information block and multiple system information blocks, where the master information block is used to broadcast state information of the base station, and the system information blocks are used to broadcast access information required by the user equipment for accessing the base station. The structure of the system information in this embodiment of the present invention may be shown in FIG. 11.

S902: The user equipment receives the system information of the first base station sent by the first base station.

S903: The user equipment accesses the first base station according to the system information of the first base station.

S904: The user equipment sends identifiers of coverage base stations that cover the user equipment and access capability information of the user equipment to the first base station.

In this embodiment of the present invention, after accessing the first base station, the user equipment sends the identifiers of the coverage base stations that cover the user equipment and the access capability information of the user equipment to the first base station. Optionally, the coverage base stations that cover the user equipment may include a high-frequency base station, a low-frequency base station, and a hybrid low/high-frequency base station. Optionally, the access capability information may be used to indicate a target frequency band (such as a high-frequency frequency band or a low-frequency frequency band) that the user equipment is allowed to access. Optionally, the target frequency band may be different from a frequency band in which the frequency of the first base station is located. For example, if the frequency of the first base station is located in a low-frequency frequency band, the target frequency band may be a high-frequency frequency band that the user equipment is allowed to access; and if the frequency of the first base station is located in a high-frequency frequency band, the target frequency band may be a low-frequency frequency band that the user equipment is allowed to access.

In this embodiment of the present invention, the user equipment sends the identifiers of the coverage base stations that cover the user equipment and the access capability information of the user equipment to the first base station, so that the first base station determines, from the coverage base stations according to the target frequency band in the access capability information, one or more target base stations whose frequencies are located in the target frequency band, and sends system information of the one or more target base stations to the user equipment.

S905: The first base station receives the identifiers of the coverage base stations that cover the user equipment and the access capability information of the user equipment that are sent by the user equipment.

S906: The first base station determines, from the coverage base stations according to the target frequency band, one or more target base stations whose frequencies are located in a target frequency band.

S907: The first base station sends system information of the one or more target base stations to the user equipment.

In this embodiment of the present invention, the first base station may store the system information of the one or more target base stations.

In this embodiment of the present invention, the first base station sends the system information of the one or more target base stations to the user equipment, so that the user equipment selects system information of one target base station from the system information of the one or more target base stations as system information of a second base station, and accesses the second base station according to the system information of the second base station.

S908: The user equipment receives the system information of the one or more target base stations sent by the first base station.

S909: The user equipment selects system information of one target base station from the system information of the one or more target base stations as system information of a second base station, and accesses the second base station according to the system information of the second base station.

In this embodiment of the present invention, if the first base station is a high-frequency base station, the second base station is a low-frequency base station or a hybrid low/high-frequency base station, and if the second base station is a hybrid low/high-frequency base station, that the user equipment accesses the second base station is that the user equipment accesses a low-frequency network of the hybrid low/high-frequency base station. If the first base station is a low-frequency base station, the second base station is a high-frequency base station or a hybrid low/high-frequency base station, and if the second base station is a hybrid low/high-frequency base station, that the user equipment accesses the second base station is that the user equipment accesses a high-frequency network of the hybrid low/high-frequency base station. If the first base station is a hybrid low/high-frequency base station, and the user equipment accesses a high-frequency network of the hybrid low/high-frequency base station, the second base station may be a low-frequency base station or a hybrid low/high-frequency base station (the first base station or another hybrid low/high-frequency base station), and if the second base station is a hybrid low/high-frequency base station, that the user equipment accesses the second base station is that the user equipment accesses a low-frequency network of the hybrid low/high-frequency base station. If the first base station is a hybrid low/high-frequency base station, and the user equipment accesses a low-frequency network of the hybrid low/high-frequency base station, the second base station may be a high-frequency base station or a hybrid low/high-frequency base station (the first base station or another hybrid low/high-frequency base station), and if the second base station is a hybrid low/high-frequency base station, that the user equipment accesses the second base station is that the user equipment accesses a high-frequency network of the hybrid low/high-frequency base station.

S910: The one or more target base stations send updated system information of the one or more target base stations to the first base station.

S911: The first base station receives the updated system information sent by the one or more target base stations.

S912: The first base station sends, to the one or more target base stations, a feedback message for feeding back whether the first base station has finished receiving the updated system information.

In this embodiment of the present invention, if the feedback message is used to feed back that the first base station has not finished receiving the updated system information, the one or more target base stations continue sending the updated system information to the first base station.

In this embodiment of the present invention, system information of a first base station is sent cyclically, the first base station stores system information of a second base station, and the system information of the second base station may be sent by the first base station to user equipment on demand of the user equipment, which decreases load of a broadcast channel. When the system information of the second base station is updated, the system information of the second base station stored by the first base station can also be updated in a timely manner, which ensures reliability of a communications system. Moreover, the user equipment does not need to search for the second base station, which reduces power consumption of the user equipment.

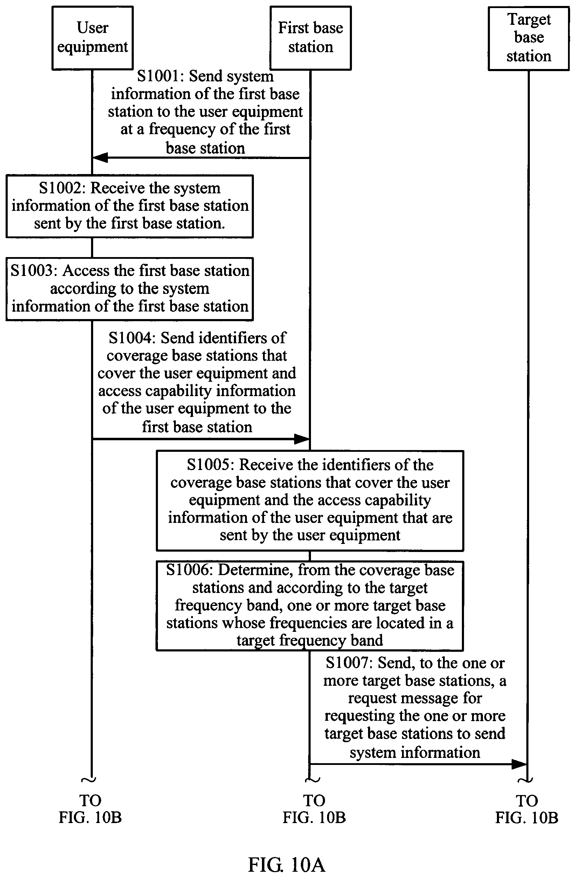

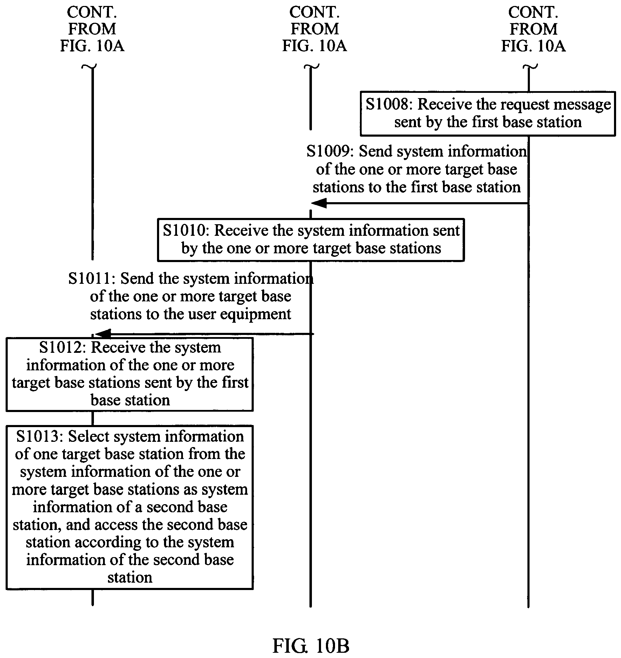

Referring to FIG. 10A and FIG. 10B, FIG. 10A and FIG. 10B are a schematic flowchart of still another system information transmission method according to an example of the present application. The method shown in FIG. 10A and FIG. 10B may be applied to a system architecture with low/high-frequency collaborative networking, which is not limited by this embodiment of the present invention. As shown in FIG. 10A and FIG. 10B, the system information transmission method may include the following steps:

S1001: A first base station sends system information of the first base station to user equipment at a frequency of the first base station.

In this embodiment of the present invention, the system information of the first base station is used to trigger the user equipment to access the first base station according to the system information of the first base station, that is, to access a network (a high-frequency network or a low-frequency network) provided by the first base station.

In this example of the present application, a structure of the system information includes one master information block and multiple system information blocks, where the master information block is used to broadcast state information of the base station, and the system information blocks are used to broadcast access information required by the user equipment for accessing the base station. The structure of the system information in this embodiment of the present invention may be shown in FIG. 11.

S1002: The user equipment receives the system information of the first base station sent by the first base station.

S1003: The user equipment accesses the first base station according to the system information of the first base station.

S1004: The user equipment sends identifiers of coverage base stations that cover the user equipment and access capability information of the user equipment to the first base station.

In this example of the present application, after accessing the first base station, the user equipment sends the identifiers of the coverage base stations that cover the user equipment and the access capability information of the user equipment to the first base station. Optionally, the coverage base stations that cover the user equipment may include a high-frequency base station, a low-frequency base station, and a hybrid low/high-frequency base station. Optionally, the access capability information may be used to indicate a target frequency band (such as a high-frequency frequency band or a low-frequency frequency band) that the user equipment is allowed to access. Optionally, the target frequency band may be different from a frequency band in which the frequency of the first base station is located. For example, if the frequency of the first base station is located in a low-frequency frequency band, the target frequency band may be a high-frequency frequency band that the user equipment is allowed to access; and if the frequency of the first base station is located in a high-frequency frequency band, the target frequency band may be a low-frequency frequency band that the user equipment is allowed to access.

In this example of the present application, the user equipment sends the identifiers of the coverage base stations that cover the user equipment and the access capability information of the user equipment to the first base station, so that the first base station determines, from the coverage base stations according to the target frequency band in the access capability information, one or more target base stations whose frequencies are located in the target frequency band, and sends system information of the one or more target base stations to the user equipment.

S1005: The first base station receives the identifiers of the coverage base stations that cover the user equipment and the access capability information of the user equipment that are sent by the user equipment.

S1006: The first base station determines, from the coverage base stations according to the target frequency band, one or more target base stations whose frequencies are located in a target frequency band.

S1007: The first base station sends, to the one or more target base stations, a request message for requesting the one or more target base stations to send system information.

S1008: The one or more target base stations receive the request message sent by the first base station.

S1009: The one or more target base stations send system information of the one or more target base stations to the first base station.

In this example of the present application, after receiving the request message, the one or more target base stations send the system information of the one or more target base stations to the first base station.

S1010: The first base station receives the system information sent by the one or more target base stations.

S1011: The first base station sends the system information of the one or more target base stations to the user equipment.

S1012: The user equipment receives the system information of the one or more target base stations sent by the first base station.

S1013: The user equipment selects system information of one target base station from the system information of the one or more target base stations as system information of a second base station, and accesses the second base station according to the system information of the second base station.

In this example of the present application, if the first base station is a high-frequency base station, the second base station is a low-frequency base station or a hybrid low/high-frequency base station, and if the second base station is a hybrid low/high-frequency base station, that the user equipment accesses the second base station is that the user equipment accesses a low-frequency network of the hybrid low/high-frequency base station. If the first base station is a low-frequency base station, the second base station is a high-frequency base station or a hybrid low/high-frequency base station, and if the second base station is a hybrid low/high-frequency base station, that the user equipment accesses the second base station is that the user equipment accesses a high-frequency network of the hybrid low/high-frequency base station. If the first base station is a hybrid low/high-frequency base station, and the user equipment accesses a high-frequency network of the hybrid low/high-frequency base station, the second base station may be a low-frequency base station or a hybrid low/high-frequency base station (the first base station or another hybrid low/high-frequency base station), and if the second base station is a hybrid low/high-frequency base station, that the user equipment accesses the second base station is that the user equipment accesses a low-frequency network of the hybrid low/high-frequency base station. If the first base station is a hybrid low/high-frequency base station, and the user equipment accesses a low-frequency network of the hybrid low/high-frequency base station, the second base station may be a high-frequency base station or a hybrid low/high-frequency base station (the first base station or another hybrid low/high-frequency base station), and if the second base station is a hybrid low/high-frequency base station, that the user equipment accesses the second base station is that the user equipment accesses a high-frequency network of the hybrid low/high-frequency base station.

In this example of the present application, system information of a first base station is sent cyclically, and system information of a second base station is sent on demand, which decreases load of a broadcast channel. Moreover, the system information of the second base station may be sent by the first base station to user equipment by means of real-time communication between the base stations, and the user equipment does not need to search for the second base station, which reduces power consumption of the user equipment and ensures a requirement of the user equipment on a communications system.

It should be noted that, in the foregoing embodiments, the descriptions of the embodiments have their respective focuses. For a part that is not described in detail in an embodiment, reference may be made to related descriptions in other embodiments. In addition, a person skilled in the art should also understand that all the embodiments described in this specification are exemplary embodiments, and the involved actions and modules are not necessarily mandatory to the present invention.

The steps in the methods in the embodiments of the present invention may be reordered, combined, or deleted according to actual needs.

The modules in the base station and the user equipment in the embodiments of the present invention may be combined, divided, or deleted according to actual needs.

In the embodiments of the present invention, the sending module of the base station may be a radio transmission device, the receiving module of the base station may be a radio receiving device, and the determining module of the base station may be a controller in the base station. In the embodiments of the present invention, the receiving module of the user equipment may be a receiver, the sending module of the user equipment may be a transmitter, and the access module and the selecting module of the user equipment may be a controller of the user equipment. The embodiments of the present invention impose no limitation.

The modules in the embodiments of the present invention may be implemented by a universal integrated circuit, such as a CPU (Central Processing Unit, central processing unit), or by an ASIC (Application Specific Integrated Circuit, application specific integrated circuit).

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

The foregoing describes in detail the system information transmission method, the base station, and the user equipment provided in the embodiments of the present invention. Although the principles and implementation manners of the present invention are described by using specific examples, the foregoing embodiments are only intended to help understand the method and core idea of the present invention. In addition, a person of ordinary skill in the art may make modifications to the specific implementation manners and the application scope of the present invention based on to the idea of the present invention. Therefore, the specification shall not be construed as a limitation on the present invention.

## Claims

1. Abase station (100), comprising:
a sending module (101), configured to send system information of the base station (100) to user equipment, UE, at a first frequency band of the base station (100);
a receiving module (102), configured to receive identifiers of coverage base stations that cover the UE and access capability information of the UE sent by the UE, wherein the access capability is used to indicate a second frequency band that the UE is allowed to access;
a determining module (103), configured to determine, from the coverage base stations and according to the second frequency band, one or more target base stations whose frequencies are located in the second frequency band;
the sending module (101), configured to send system information of the one or more target base stations to the UE.

2. The base station according to claim 1, wherein the sending module (101) is further configured to send, to the one or more target base stations, a request message for requesting the one or more target base stations to send system information, to trigger the one or more target base stations to respond to the request message; and
the receiving module (102) is further configured to receive the system information sent by the one or more target base stations.

3. The base station according to claim 1 or 2, wherein the base station stores the system information of the one or more target base stations;
the receiving module (102) is further configured to receive updated system information sent by the one or more target base stations; and
the sending module (101) is further configured to send, to the one or more target base stations, a feedback message for feeding back whether the base station has finished receiving the updated system information.

4. The base station according to any one of claims 1 to 3, wherein when the base station is a high-frequency base station, the target base station is a low-frequency base station or a hybrid low/high-frequency base station; or
when the base station is a low-frequency base station, the target base station is a high-frequency base station or a hybrid low/high-frequency base station; or
when the base station is a hybrid low/high-frequency base station, the target base station is any one base station of a high-frequency base station, a low-frequency base station, or a hybrid low/high-frequency base station.

5. The base station according to any one of claims 1 to 4, wherein a structure of the system information comprises one master information block and multiple system information blocks.

6. The base station according to claim 5, wherein the master information block is used to broadcast state information of the base station that sends the system information, and the system information blocks are used to broadcast access information required by the user equipment for accessing the base station that sends the system information.

7. User equipment, comprising:
a receiving module (301), configured to receive system information of a first base station sent by the first base station at a first frequency band;
an access module (302), configured to access the first base station according to the system information of the first base station;
a sending module (303), configured to send identifiers of coverage base stations that cover the user equipment and access capability information of the user equipment to the first base station, wherein the access capability information is used to indicate a second frequency band that the user equipment is allowed to access;
the receiving module (301), configured to receive system information of one or more target base station sent by the first base station;
a selecting module (304), configured to select system information of one target base station from the system information of the one or more target base stations as system information of a second base station;
the access module (302), configured to access the second base station according to the system information of the second base station.

8. The user equipment according to claim 7, wherein when the first base station is a high-frequency base station, the second base station is a low-frequency base station or a hybrid low/high-frequency base station; or when the first base station is a low-frequency base station, the second base station is a high-frequency base station or a hybrid low/high-frequency base station; or when the first base station is a hybrid low/high-frequency base station, the second base station is any one base station of a high-frequency base station, a low-frequency base station, or a hybrid low/high-frequency base station.

9. The user equipment according to claim 7 or 8, wherein a structure of the system information comprises one master information block and multiple system information blocks.

10. The user equipment according to claim 9, wherein the master information block is used to broadcast state information of the base station that sends the system information, and the system information blocks are used to broadcast access information required by the user equipment for accessing the base station that sends the system information.

11. A system information transmission method, comprising:
sending (501), by a first base station, system information of the first base station to user equipment at a first frequency band;
receiving (502), by the first base station, identifiers of coverage base stations that cover the user equipment and access capability information of the user equipment sent by the user equipment, wherein the access capability information is used to indicate a second frequency band that the user equipment is allowed to access;
determining (503), by the first base station, from the coverage base stations and according to the second frequency band, one or more second base stations whose frequencies are located in the second frequency band; and
sending (504), by the first base station, system information of the one or more target base stations to the user equipment.

12. The method according to claim 11, the method further comprises:
sending, by the first base station to the one or more target base stations, a request message for requesting the one or more target base stations to send system information, to trigger the one or more target base stations to respond to the request message; and
receiving, by the first base station, the system information sent by the one or more target base stations.

13. The method according to claim 11, wherein the first base station stores the system information of the one or more target base stations; and the method further comprises:
receiving, by the first base station, updated system information sent by the one or more target base stations; and
sending, by the first base station to the one or more target base stations, a feedback message for feeding back whether the first base station has finished receiving the updated system information.

14. The method according to claim 11 to 13, wherein when the first base station is a high-frequency base station, the second base station is a low-frequency base station or a hybrid low/high-frequency base station; or
when the first base station is a low-frequency base station, the second base station is a high-frequency base station or a hybrid low/high-frequency base station; or
when the first base station is a hybrid low/high-frequency base station, the second base station is any one base station of a high-frequency base station, a low-frequency base station, or a hybrid low/high-frequency base station.

15. A system information transmission method, comprising:
receiving (801), by user equipment, system information of a first base station sent by the first base station at a frequency of the first base station;
accessing (802), by user equipment, the first base station according to the system information of the first base station;
sending (803), by the user equipment, identifiers of coverage base stations that cover the user equipment and access capability information of the user equipment to the first base station, wherein the access capability information is used to indicate a second frequency band that the user equipment is allowed to access;
receiving (804), by the user equipment, system information of one or more target base station sent by the first base station;
selecting (805), by the user equipment, system information of one target base station from the system information of the one or more target base stations as system information of a second base station and accessing the second base station according to the system information of the second base station.

16. The method according to claim 15, wherein when the first base station is a high-frequency base station, the second base station is a low-frequency base station or a hybrid low/high-frequency base station; or when the first base station is a low-frequency base station, the second base station is a high-frequency base station or a hybrid low/high-frequency base station; or when the first base station is a hybrid low/high-frequency base station, the second base station is any one base station of a high-frequency base station, a low-frequency base station, or a hybrid low/high-frequency base station.

## Patentansprüche

1. Basisstation (100), umfassend:
ein Sendemodul (101), konfiguriert zum Senden von Systeminformationen der Basisstation (100) an eine Benutzerausrüstung, UE, bei einem ersten Frequenzband der Basisstation (100);
ein Empfangsmodul (102), konfiguriert zum Empfangen von Kennungen von Abdeckungsbasisstationen, die die UE abdecken, und Zugriffsfähigkeit-Informationen der UE, gesendet von der UE, wobei die Zugriffsfähigkeit verwendet wird, ein zweites Frequenzband anzugeben, auf das zuzugreifen der UE gestattet ist;
ein Bestimmungsmodul (103), konfiguriert zum Bestimmen, aus den Abdeckungsbasisstationen und gemäß dem zweiten Frequenzband, einer oder mehrerer Zielbasisstationen, deren Frequenzen sich in dem zweiten Frequenzband befinden;
das Sendemodul (101) konfiguriert, zum Senden von Systeminformationen der einen oder mehreren Zielbasisstationen an die UE.

2. Basisstation nach Anspruch 1, wobei das Sendemodul (101) ferner konfiguriert ist zum Senden, an die eine oder mehreren Zielbasisstationen, einer Anforderungsnachricht zum Anfordern, dass die eine oder mehreren Zielbasisstationen Systeminformationen senden, um auszulösen, dass die eine oder mehreren Zielbasisstationen auf die Anforderungsnachricht antworten; und
das Empfangsmodul (102) ferner konfiguriert ist zum Empfangen der durch die eine oder mehreren Zielbasisstationen gesandten Systeminformationen.

3. Basisstation nach Anspruch 1 oder 2, wobei die Basisstation die Systeminformationen der einen oder mehreren Zielbasisstationen speichert;
das Empfangsmodul (102) ferner konfiguriert ist zum Empfangen aktualisierter Systeminformationen, gesandt durch die eine oder mehreren Zielbasisstationen; und das Sendemodul (101) ferner konfiguriert ist zum Senden, an die eine oder mehreren Zielbasisstationen, einer Rückmeldungsnachricht zum Rückmelden, ob die Basisstation das Empfangen der aktualisierten Systeminformationen beendet hat.

4. Basisstation nach einem der Ansprüche 1 bis 3, wobei, wenn die Basisstation eine Hochfrequenz-Basisstation ist, die Zielbasisstation eine Niederfrequenz-Basisstation oder eine Hybrid-Nieder-/Hochfrequenz-Basisstation ist; oder
wenn die Basisstation eine Niederfrequenz-Basisstation ist, die Zielbasisstation eine Hochfrequenz-Basisstation oder eine Hybrid-Nieder-/Hochfrequenz-Basisstation ist;
oder
wenn die Basisstation eine Hybrid-Nieder-/Hochfrequenz-Basisstation ist, die Zielbasisstation eine beliebige Basisstation aus einer Hochfrequenz-Basisstation, einer Niederfrequenz-Basisstation oder einer Hybrid-Nieder-/Hochfrequenz-Basisstation ist.

5. Basisstation nach einem der Ansprüche 1 bis 4, wobei eine Struktur der Systeminformationen einen Hauptinformationsblock und mehrere Systeminformationsblöcke umfasst.

6. Basisstation nach Anspruch 5, wobei der Hauptinformationsblock zum Rundsenden von Statusinformationen der Basisstation, die die Systeminformation sendet, verwendet wird und die Systeminformationsblöcke zum Rundsenden von Zugriffsinformationen, die durch die Benutzerausrüstung zum Zugreifen auf die Basisstation, die die Systeminformation sendet, benötigt werden, verwendet werden.

7. Benutzerausrüstung, umfassend:
ein Empfangsmodul (301), konfiguriert zum Empfangen von Systeminformationen einer ersten Basisstation, gesendet durch die erste Basisstation bei einem ersten Frequenzband;
ein Zugriffsmodul (302), konfiguriert zum Zugreifen auf die erste Basisstation gemäß den Systeminformationen der ersten Basisstation;
ein Sendemodul (303), konfiguriert zum Senden von Kennungen von Abdeckungsbasisstationen, die die Benutzerausrüstung abdecken, und Zugriffsfähigkeit-Informationen der Benutzerausrüstung an die erste Basisstation,
wobei die Zugriffsfähigkeit-Informationen verwendet werden, ein zweites Frequenzband anzugeben, auf das zuzugreifen der Benutzerausrüstung gestattet ist, das Empfangsmodul (301) konfiguriert zum Empfangen der durch die erste Basisstation gesandten Systeminformationen der einen oder mehreren Zielbasisstationen;
ein Auswahlmodul (304), konfiguriert zum Auswählen von Systeminformationen einer Zielbasisstation aus den Systeminformationen der einen oder mehreren Zielbasisstationen als Systeminformationen einer zweiten Basisstation;
das Zugriffsmodul (302) konfiguriert zum Zugreifen auf die zweite Basisstation gemäß den Systeminformationen der zweiten Basisstation.

8. Benutzerausrüstung nach Anspruch 7, wobei, wenn die erste Basisstation eine Hochfrequenz-Basisstation ist, die zweite Basisstation eine Niederfrequenz-Basisstation oder eine Hybrid-Nieder-/Hochfrequenz-Basisstation ist; oder wenn die erste Basisstation eine Niederfrequenz-Basisstation ist, die zweite Basisstation eine Hochfrequenz-Basisstation oder eine Hybrid-Nieder-/Hochfrequenz-Basisstation ist; oder wenn die erste Basisstation eine Hybrid-Nieder-/Hochfrequenz-Basisstation ist, die zweite Basisstation eine beliebige Basisstation einer Hochfrequenz-Basisstation, einer Niederfrequenz-Basisstation oder einer Hybrid-Nieder-/Hochfrequenz-Basisstation ist.

9. Benutzerausrüstung nach Ansprüch 7 oder 8, wobei eine Struktur der Systeminformationen Hauptinformationsblock und mehrere Systeminformationsblöcke umfasst.

10. Benutzerausrüstung nach Anspruch 9, wobei der Hauptinformationsblock zum Rundsenden von Statusinformationen der Basisstation, die die Systemsinformationen sendet, verwendet wird und die Systeminformationsblöcke zum Rundsenden von Zugriffsinformationen, die durch die Benutzerausrüstung zum Zugreifen auf die Basisstation benötigt werden, verwendet werden, die die Systemsinformationen sendet.

11. Systeminformationen-Übertragungsverfahren, umfassend:
Senden (501), durch eine erste Basisstation, von Systeminformationen der ersten Basisstation an eine Benutzerausrüstung bei einem ersten Frequenzband;
Empfangen (502), durch die erste Basisstation, von Kennungen von Abdeckungsbasisstationen, die die Benutzerausrüstung abdecken, und Zugriffsfähigkeit-Informationen der Benutzerausrüstung, gesendet von der Benutzerausrüstung, wobei die Zugriffsfähigkeit-Informationen verwendet werden,
ein zweites Frequenzband anzugeben, auf das zuzugreifen der Benutzerausrüstung gestattet ist;
Bestimmen (503), durch die erste Basisstation, aus den Abdeckungsbasisstationen und gemäß dem zweiten Frequenzband, einer oder mehrerer zweiten Basisstationen, deren Frequenzen sich in dem zweiten Frequenzband befinden; und
Senden (504), durch die erste Basisstation, von Systeminformationen der einen oder mehreren Zielbasisstationen an die Benutzerausrüstung.

12. Verfahren nach Anspruch 11, das Verfahren ferner umfasst:
Senden, durch die erste Basisstation an die eine oder mehreren Zielbasisstationen, einer Anforderungsnachricht zum Anfordern, dass die eine oder mehreren Zielbasisstationen Systeminformationen senden, um auszulösen, dass die eine oder mehreren Zielbasisstationen auf die Anforderungsnachricht antworten; und
Empfangen, durch die erste Basisstation, der durch die eine oder mehreren Zielbasisstationen gesandten Systeminformationen.

13. Verfahren nach Anspruch 11, wobei die erste Basisstation die Systeminformationen der einen oder mehreren Zielbasisstationen speichert; und das Verfahren ferner umfasst:
Empfangen, durch die erste Basisstation, aktualisierter Systeminformationen, gesandt durch die eine oder mehreren Zielbasisstationen; und
Senden, durch die erste Basisstation an die eine oder mehreren Zielbasisstationen, einer Rückmeldungsnachricht zum Rückmelden, ob die erste Basisstation das Empfangen der aktualisierten Systeminformationen beendet hat.

14. Verfahren nach Anspruch 11 bis 13, wobei, wenn die erste Basisstation eine Hochfrequenz-Basisstation ist, die zweite Basisstation eine Niederfrequenz-Basisstation oder eine Hybrid-Nieder-/Hochfrequenz-Basisstation ist; oder
wenn die erste Basisstation eine Niederfrequenz-Basisstation ist, die zweite Basisstation eine Hochfrequenz-Basisstation oder eine Hybrid-Nieder-/Hochfrequenz-Basisstation ist; oder
wenn die erste Basisstation eine Hybrid-Nieder-/Hochfrequenz-Basisstation ist, die zweite Basisstation eine beliebige Basisstation einer Hochfrequenz-Basisstation, einer Niederfrequenz-Basisstation oder einer Hybrid-Nieder-/Hochfrequenz-Basisstation ist.

15. Systeminformationen-Übertragungsverfahren, umfassend:
Empfangen (801), durch eine Benutzerausrüstung, von Systeminformationen einer ersten Basisstation, gesendet durch die erste Basisstation bei einer Frequenz der ersten Basisstation;
Zugreifen (802), durch die Benutzerausrüstung, auf die erste Basisstation gemäß den Systeminformationen der ersten Basisstation;
Senden (803), durch die Benutzerausrüstung, von Kennungen von Abdeckungsbasisstationen, die die Benutzerausrüstung abdecken, und Zugriffsfähigkeit-Informationen der Benutzerausrüstung an die erste Basisstation, wobei die Zugriffsfähigkeit-Informationen verwendet werden, ein zweites Frequenzband anzugeben, auf das zuzugreifen der Benutzerausrüstung gestattet ist;
Empfangen (804), durch die Benutzerausrüstung, durch die erste Basisstation gesandten Systeminformationen der einen oder mehreren Zielbasisstationen;
Auswählen (805), durch die Benutzerausrüstung, von Systeminformationen einer Zielbasisstation aus den Systeminformationen der einen oder mehreren Zielbasisstationen als Systeminformationen einer zweiten Basisstation, und Zugreifen auf die zweite Basisstation gemäß den Systeminformationen der zweiten Basisstation.

16. Verfahren nach Anspruch 15, wobei, wenn die erste Basisstation eine Hochfrequenz-Basisstation ist, die zweite Basisstation eine Niederfrequenz-Basisstation oder eine Hybrid-Nieder-/Hochfrequenz-Basisstation ist; oder wenn die erste Basisstation eine Niederfrequenz-Basisstation ist, die zweite Basisstation eine Hochfrequenz-Basisstation oder eine Hybrid-Nieder-/Hochfrequenz-Basisstation ist; oder wenn die erste Basisstation eine Hybrid-Nieder-/Hochfrequenz-Basisstation ist, die zweite Basisstation eine beliebige Basisstation einer Hochfrequenz-Basisstation, einer Niederfrequenz-Basisstation oder einer Hybrid-Nieder-/Hochfrequenz-Basisstation ist.

## Revendications

1. Station de base (100) comprenant :
un module d'envoi (101), configuré pour envoyer des informations système de la station de base (100) à un équipement utilisateur, UE, à une première baude de fréquences de la station de base (100);
un module de réception (102), configuré pour recevoir des identifiants de stations de base de couverture qui couvrent l'UE et des informations de capacité d'accès de l'UE envoyées par l'UE, où la capacité d'accès sont utilisées pour indiquer une seconde bande de fréquences à laquelle l'UE est autorisé à accéder;
un module de détermination (103), configuré pour déterminer, à partir des stations de base de couverture et en fonction de la seconde bande de fréquences, une ou plusieurs stations de base cibles dont les fréquences sont situées dans la seconde bande de fréquences ;
le module d'envoi (101), configuré pour envoyer des informations système des une ou plusieurs stations de base cibles à l'UE.

2. Station de base selon la revendication 1, dans laquelle le module d'envoi (101) est en outre configuré pour envoyer, aux une ou plusieurs stations de base cibles, un message de demande pour demander aux une ou plusieurs stations de base cibles d'envoyer des informations système, pour déclencher les une ou plusieurs stations de base cibles pour répondre au message de demande ; et
le module de réception (102) est en outre configuré pour recevoir les informations système envoyées par les une ou plusieurs stations de base cibles.

3. Station de base selon la revendication 1 ou 2, dans laquelle la station de base stocke les informations système des une ou plusieurs stations de base cibles ;
le module de réception (102) est en outre configuré pour recevoir des informations système mises à jour envoyées par les une ou plusieurs stations de base cibles ; et
le module d'envoi (101) est en outre configuré pour envoyer, aux une ou plusieurs stations de base cibles, un message de retour pour indiquer en retour si la station de base a fini de recevoir les informations système mises à jour.

4. Station de base selon l'une quelconque des revendications 1 à 3, dans laquelle, lorsque la station de base est une station de base haute fréquence, la station de base cible est une station de base basse fréquence ou une station de base hybride basse fréquence/haute fréquence ; ou
lorsque la station de base est une station de base basse fréquence, la station de base cible est une station de base haute fréquence ou une station de base hybride basse fréquence/haute fréquence ; ou
lorsque la station de base est une station de base hybride basse fréquence/haute fréquence, la station de base cible est une station de base quelconque parmi une station de base haute fréquence, une station de base basse fréquence, ou une station de base hybride basse fréquence/haute fréquence.

5. Station de base selon l'une quelconque de revendications 1 à 4, dans laquelle une structure des informations système comprend un bloc d'informations maître et plusieurs blocs d'informations système.

6. Station de base selon la revendication 5, dans laquelle le bloc d'informations maître est utilisé pour diffuser des informations d'état de la station de base qui envoyé les informations système, et les blocs d'informations système sont utilisés pour diffuser des informations d'accès requises par l'équipement utilisateur pour accéder à la station de base.

7. Équipement utilisateur, comprenant :
un module de réception (301), configuré pour recevoir des informations système d'une première station de base envoyées par la première station de base à une première bande de fréquences ;
un module d'accès (302), configuré pour accéder à la première station de base en fonction des informations système de la première station de base ;
un module d'envoi (303), configuré pour envoyer des identifiants de stations de base de couverture qui couvrent l'équipement utilisateur et des informations de capacité d'accès de l'équipement utilisateur à la première station de base, où les informations de capacité d'accès sont utilisées pour indiquer une seconde bande de fréquences à laquelle l'équipement utilisateur est autorisé à accéder ;
le module de réception (301), configuré pour recevoir les informations système des une ou plusieurs stations de base cibles envoyées par la première station de base ;
un module de sélection (304), configuré pour sélectionner des informations système d'une station de base cible parmi les informations système des une ou plusieurs stations de base cibles comme informations système d'une seconde station de base ;
le module d'accès (302), configuré pour accéder à la seconde station de base en fonction des informations système de la seconde station de base.

8. Équipement utilisateur selon la revendication 7, dans lequel, lorsque la première station de base est une station de base haute fréquence, la seconde station de base est une station de base basse fréquence ou une station de base hybride basse fréquence/haute fréquence ; ou lorsque la première station de base est une station de base basse fréquence, la seconde station de base est une station de base haute fréquence ou une station de base hybride basse fréquence/haute fréquence ; ou lorsque la première station de base est une station de base hybride basse fréquence/haute fréquence, la seconde station de base est une station de base quelconque parmi une station de base haute fréquence, une station de base basse fréquence, ou une station de base hybride basse fréquence/haute fréquence.

9. Équipement utilisateur selon la revendication 7 ou 8, dans lequel une structure des informations système comprend un bloc d'informations maître et plusieurs blocs d'informations système.

10. Équipement utilisateur selon la revendication 9, dans lequel le bloc d'informations maître est utilisé pour diffuser des informations d'état de la station de base qui envoyé les informations système, et les blocs d'informations système sont utilisés pour diffuser des informations d'accès requises par l'équipement utilisateur pour accéder la station de base qui envoyé les informations système.

11. Procédé de transmission d'informations système, comprenant les étapes suivantes :
envoyer (501), par une première station de base, des informations système de la première station de base à un équipement utilisateur à une première bande de fréquences ;
recevoir (502), par la première station de base, des identifiants de stations de base de couverture qui couvrent l'équipement utilisateur et des informations de capacité d'accès de l'équipement utilisateur envoyées par l'équipement utilisateur, où les informations de capacité d'accès sont utilisées pour indiquer une seconde bande de fréquences à laquelle l'équipement utilisateur est autorisé à accéder;
déterminer (503), par la première station de base, à partir des stations de base de couverture et en fonction de la seconde bande de fréquences, une ou plusieurs secondes stations de base dont les fréquences sont situées dans la seconde bande de fréquences; et
envoyer (504), par la première station de base, des informations système des une ou plusieurs stations de base cibles à l'équipement utilisateur.

12. Procédé selon la revendication 11, le procédé comprend en outre les étapes suivantes :
envoyer, par la première station de base aux une ou plusieurs stations de base cibles, un message de demande pour demander aux une ou plusieurs stations de base cibles d'envoyer des informations système pour déclencher les une ou plusieurs stations de base cibles pour répondre au message de demande ; et
recevoir, par la première station de base, les informations système envoyées par les une ou plusieurs stations de base cibles.

13. Procédé selon la revendication 11, dans lequel la première station de base stocke les informations système des une ou plusieurs stations de base cibles ; et le procédé comprend en outre les étapes suivantes :
recevoir, par la première station de base, des informations système mises à jour envoyées par les une ou plusieurs stations de base cibles ; et
envoyer, par la première station de base aux une ou plusieurs stations de base cibles, un message de retour pour indiquer en retour si la première station de base a fini de recevoir les informations système mises à jour.

14. Procédé selon la revendication 11 à 13, dans lequel lorsque la première station de base est une station de base haute fréquence, la seconde station de base est une station de base basse fréquence ou une station de base hybride basse fréquence/haute fréquence ; ou lorsque la première station de base est une station de base basse fréquence, la seconde station de base est une station de base haute fréquence ou une station de base hybride basse fréquence/haute fréquence ; ou
lorsque la première station de base est une station de base hybride basse fréquence/haute fréquence, la seconde station de base est une station de base quelconque parmi une station de base haute fréquence, une station de base basse fréquence, ou une station de base hybride basse fréquence/haute fréquence.

15. Procédé de transmission d'informations système, comprenant les étapes suivantes :
recevoir (801), par l'équipement utilisateur, des informations système d'une première station de base envoyées par la première station de base à une fréquence de la première station de base ;
accéder (802), par l'équipement utilisateur, à la première station de base en fonction des informations système de la première station de base ;
envoyer (803), par l'équipement utilisateur, des identifiants de stations de base de couverture qui couvrent l'équipement utilisateur et des informations de capacité d'accès de l'équipement utilisateur à la première station de base, où les informations de capacité d'accès sont utilisées pour indiquer une seconde bande de fréquences à laquelle l'équipement utilisateur est autorisé à accéder;
recevoir (804), par l'équipement utilisateur, des informations système des une ou plusieurs stations de base cibles envoyées par la première station de base ;
sélectionner (805), par l'équipement utilisateur, des informations système d'une station de base cible parmi les informations système des une ou plusieurs stations de base cibles comme informations système d'une seconde station de base, et accéder à la seconde station de base en fonction des informations système de la seconde station de base.

16. Procédé selon la revendication 15, dans lequel, lorsque la première station de base est une station de base haute fréquence, la seconde station de base est une station de base basse fréquence ou une station de base hybride basse fréquence/haute fréquence ; ou lorsque la première station de base est une station de base basse fréquence, la seconde station de base est une station de base haute fréquence ou une station de base hybride basse fréquence/haute fréquence ; ou lorsque la première station de base est une station de base hybride basse fréquence/haute fréquence, la seconde station de base est une station de base quelconque parmi une station de base haute fréquence, une station de base basse fréquence, ou une station de base hybride basse fréquence/haute fréquence.
